# EUROPEAN PATENT APPLICATION

(11) **EP 4 708 962 A1**
(43) Date of publication of application: **11.03.2026**
(21) Application number: 24830887.6
(22) Date of filing: 27.06.2024
(51) Int. Cl.: H04W 36/00, H04B 7/185

(54) **COMMUNICATION METHOD**

(30) Priority: 29.06.2023 CN 202310794402
(71) Applicant: Huawei Technologies Co., Ltd., Shenzhen, Guangdong 518129 (CN)
(72) Inventor: CHEN, Ying, Shenzhen, Guangdong 518129 (CN); WANG, Yu, Shenzhen, Guangdong 518129 (CN); WANG, Jun, Shenzhen, Guangdong 518129 (CN)
(74) Representative: Pfenning, Meinig & Partner mbB
(86) International application number: PCT/CN2024/101992
(87) International publication number: WO 2025/002254

(57) **Abstract**

This application provides a communication method. The method includes: A terminal device obtains first service time information, where the first service time information corresponds to a first synchronization signal block SSB index; and the terminal device establishes a communication connection to a target satellite device based on the first service time information, where the first service time information indicates an end time point at which a source satellite device serves the terminal device, or the first service time information indicates a start time point at which the target satellite device serves the terminal device. According to the foregoing technical solution, in a process of handover from the source satellite to the target satellite, all user equipments in a cell are prevented from being handed over within a same period of time, thereby reducing occupation of network resources.

## Description

This application claims priority to Chinese Patent Application No. 202310794402.2, filed with the China National Intellectual Property Administration on June 29, 2023 and entitled "COMMUNICATION METHOD", which is incorporated herein by reference in its entirety.

### TECHNICAL FIELD

This application relates to the field of satellite communication, and more specifically, to a communication method and apparatus.

### BACKGROUND

Compared with terrestrial communication, satellite communication has its unique advantages. For example, satellite communication offers a wider coverage area, its base stations are less vulnerable to external damage caused by natural disasters, satellite communication supplies more data transmission resources for 5th generation (5th generation, 5G) communication and better communication services, and delivers a higher network rate. Therefore, supporting both terrestrial communication and satellite communication is an inevitable trend of future 5G communication, bringing significant benefits in terms of wide coverage, reliability, multi-connectivity, and high throughput.

Currently, satellite communication, which is one of application scenarios of 5G communication, has been discussed in the 3rd generation partnership project (3rd generation partnership project, 3GPP). Because satellite communication features high mobility and long latency, the high mobility of satellites causes frequent satellite handovers for terminal devices. Therefore, in a satellite handover process, all terminal devices within a given area may be handed over within a same period of time, generating a surge of handover signaling and occupying a large quantity of network resources.

Therefore, in satellite communication, how to avoid the occurrence in which all terminal devices (also referred to as user equipments) in a large-scale cell are handed over in a same period of time becomes an urgent problem to be resolved.

### SUMMARY

This application provides a communication method, to avoid the occurrence in which all user equipments within a single cell are handed from a source satellite to a target satellite in a same period of time, so as to reduce occupation of network resources.

According to a first aspect, a communication method is provided. The method is performed by a terminal device. The terminal device herein may be a terminal device, or may be a processor, a module, a chip, a chip system, or the like that is in the terminal device and that implements the method. The method includes: obtaining first service time information, where the first service time information corresponds to a first synchronization signal block SSB index; and establishing a communication connection to a target satellite device based on the first service time information, where the first service time information indicates an end time point at which a source satellite device serves the terminal device, or the first service time information indicates a start time point at which the target satellite device serves the terminal device.

According to the technical solution of this application, the terminal device obtains the first service time information, where the first service time information corresponds to the first SSB index; and the terminal device establishes the communication connection to the target satellite device based on the time point indicated by the first service time information. This can prevent all user equipments in a cell from being handed over in a same period of time, to reduce occupation of network resources.

With reference to the first aspect, in some implementations of the first aspect, the method further includes: receiving the first SSB index sent by the source satellite device; and obtaining the first service time information includes: determining the first service time information based on the first SSB index. According to the foregoing technical solution, in a process of handover from the source satellite to the target satellite, the terminal device can obtain the corresponding first service time information, and determine, based on the first service time information, a time point for being handed over to the target satellite device, to avoid the occurrence in which all the terminal devices within the cell are handed over in the same period of time, to reduce the occupation of the network resources.

With reference to the first aspect, in some implementations of the first aspect, the method further includes: receiving a first correspondence sent by the source satellite device, where the first correspondence includes a correspondence between at least one SSB index and at least one service time; and the determining the first service time information based on the first SSB index includes: determining, as the first service time information, service time information corresponding to the first SSB index in the first correspondence. According to the foregoing technical solution, in the process of handover from the source satellite to the target satellite, the terminal device can obtain the corresponding first service time information, and determine, based on the first service time information, the time point for being handed over to the target satellite device, to avoid the occurrence in which all the terminal devices within the cell are handed over in the same period of time, to reduce the occupation of the network resources.

With reference to the first aspect, in some implementations of the first aspect, obtaining the first service time further includes: receiving a first SSB message, where the first SSB message includes the first service time information. According to the foregoing technical solution, in the process of handover from the source satellite to the target satellite, the terminal device can obtain the corresponding first service time information, and determine, based on the first service time information, the time point for being handed over to the target satellite device, to avoid the occurrence in which all the terminal devices within the cell are handed over in the same period of time, to reduce the occupation of the network resources.

With reference to the first aspect, in some implementations of the first aspect, the at least one SSB index corresponding to the first service time information forms a first SSB index set, and at least one terminal device corresponding to the at least one SSB index included in the first SSB index set forms a first terminal group. According to the foregoing technical solution, all terminal devices in a large-scale cell are grouped, so that in the process of handover from the source satellite to the target satellite, the terminal devices in the cell can be handed over in batches in the form of a terminal group, to avoid the occurrence in which all the terminal devices within the cell are handed over in a same period of time, and reduce occupation of network resources.

With reference to the first aspect, in some implementations of the first aspect, a time difference between an end time point at which the source satellite device serves the first terminal group and an end time point at which the source satellite device serves the at least one terminal device is less than a first preset value; or a time difference between a start time point at which the target satellite device serves the first terminal group and a start time point at which the target satellite device serves the at least one terminal device is less than a second preset value. According to the foregoing technical solution, all the terminal devices in the large-scale cell are grouped, so that in the process of handover from the source satellite to the target satellite, the terminal devices in the cell can be handed over in batches in the form of the terminal group, to avoid the occurrence in which all the terminal devices within the cell are handed over in the same period of time, and reduce the occupation of the network resources.

With reference to the first aspect, in some implementations of the first aspect, the first terminal group corresponds to a first geographical location area, the at least one terminal device is located in the first geographical location area, and the first geographical location area is a service area of the target satellite device. According to the foregoing technical solution, all the terminal devices in the large-scale cell are grouped, so that in the process of handover from the source satellite to the target satellite, the terminal devices in the cell can be handed over in batches in the form of the terminal group, to avoid the occurrence in which all the terminal devices within the cell are handed over in the same period of time, and reduce the occupation of the network resources.

According to a second aspect, a communication method is provided. The method is performed by a source satellite device. The source satellite device herein may be a source satellite device, or may be a processor, a module, a chip, a chip system, or the like that is in the source satellite device and that implements the method. The method includes: sending a first synchronization signal block SSB index to a terminal device, where the first SSB index is used by the terminal device to determine first service time information; or sending a first SSB message to the terminal device, where the first SSB message includes the first service time information, where the first service time information indicates an end time point at which the source satellite device serves the terminal device, or the first service time information indicates a start time point at which a target satellite device serves the terminal device.

According to the technical solution of this application, the source satellite device sends the first SSB index to the terminal device, where the first SSB index is used by the terminal device to determine the corresponding first service time information, and establish a communication connection to the target satellite device at the time point indicated by the first service time information. Alternatively, the source satellite device sends the first SSB message to the terminal device, and correspondingly, the terminal device receives the first SSB message, where the first SSB message includes the first service time information. The terminal device establishes a communication connection to the target satellite device at the time point indicated by the first service time information. This can prevent all terminal devices in a cell from being handed over in a same period of time, to reduce occupation of network resources.

With reference to the second aspect, in some implementations of the second aspect, the method further includes: sending a first correspondence to the terminal device, where the first correspondence includes a correspondence between at least one SSB index and at least one service time. That the first SSB index is used by the terminal device to determine the first service time information includes: The first SSB index is used by the terminal device to determine, as the first service time information, service time information corresponding to the first SSB index in the first correspondence. According to the foregoing technical solution, the terminal device can obtain the corresponding first service time information, and determine, based on the first service time information, a time point for being handed over to the target satellite device, to avoid the occurrence in which all the terminal devices within the cell are handed over in the same period of time, to reduce the occupation of the network resources.

With reference to the second aspect, in some implementations of the second aspect, the at least one SSB index corresponding to the first service time information forms a first SSB index set, and at least one terminal device corresponding to the at least one SSB index included in the first SSB index set forms a first terminal group. According to the foregoing technical solution, all terminal devices in a large-scale cell are grouped, so that in the process of handover from the source satellite to the target satellite, the terminal devices in the cell can be handed over in batches in the form of a terminal group, to avoid the occurrence in which all the terminal devices within the cell are handed over in a same period of time, and reduce occupation of network resources.

With reference to the second aspect, in some implementations of the second aspect, a time difference between an end time point at which the source satellite device serves the first terminal group and an end time point at which the source satellite device serves the at least one terminal device is less than a first preset value; or a time difference between a start time point at which the target satellite device serves the first terminal group and a start time point at which the target satellite device serves the at least one terminal device is less than a second preset value. According to the foregoing technical solution, all the terminal devices in the large-scale cell are grouped, so that in the process of handover from the source satellite to the target satellite, the terminal devices in the cell can be handed over in batches in the form of the terminal group, to avoid the occurrence in which all the terminal devices within the cell are handed over in the same period of time.

With reference to the second aspect, in some implementations of the second aspect, the first terminal group corresponds to a first geographical location area, the at least one terminal device is located in the first geographical location area, and the first geographical location area is a service area of the target satellite device. According to the foregoing technical solution, all the terminal devices in the large-scale cell are grouped, so that in the process of handover from the source satellite to the target satellite, the terminal devices in the cell can be handed over in batches in the form of the terminal group, to avoid the occurrence in which all the terminal devices within the cell are handed over in the same period of time, and reduce the occupation of the network resources.

According to a third aspect, a communication method is provided. The method is performed by a source satellite device. The source satellite device herein may be a source satellite device, or may be a processor, a module, a chip, a chip system, or the like that is in the source satellite device and that implements the method. The method includes: obtaining first information, where the first information indicates that a service satellite in a first area is to be changed from the source satellite device to a target satellite device, and the first area is a part of a service area of the source satellite device; and sending first indication information to a first terminal device, where the first indication information indicates the first terminal device to establish a communication connection to the target satellite device, and the first terminal device is located in the first area; and/or sending second indication information to a second terminal device, where the second indication information indicates the second terminal device to communicate with the source satellite device, and the second terminal device is located in a service area other than the first area in the service area of the source satellite device.

According to the technical solution of this application, the source satellite device learns, based on the first information, that the first area is to be taken over by the target satellite device, that is, the service satellite in the first area is to be changed to the target satellite device. The source satellite device sends the first indication information to the first terminal device located in the first area, to indicate the first terminal device to establish the communication connection to the target satellite device; and sends the second indication information to the second terminal device located in the service area other than the first area in the service area of the source satellite device, to indicate the second terminal device to communicate with the source satellite device. According to the foregoing technical solution, the source satellite device sends, to a terminal device (the first terminal device) in the first area, information indicating to hand over to the target satellite device, and does not send, to a terminal device (the second terminal device) in another area, information indicating to hand over to the target satellite device, so that all terminal devices in the cell can be prevented from being handed over in a same period of time, to reduce occupation of network resources.

With reference to the third aspect, in some implementations of the third aspect, the method further includes: sending third indication information to the first terminal device, where the third indication information includes first service time information, where the first service time information indicates an end time point at which the source satellite device serves the first terminal device, or the first service time information indicates a start time point at which the target satellite device serves the first terminal device. According to the foregoing technical solution, the source satellite device sends the first service time information to the first terminal device, to indicate the time point at which the first terminal device is handed over to the target satellite device, so that in a process of handover from the source satellite to the target satellite, all the terminal devices in the cell can be prevented from being handed over in the same period of time, to reduce the occupation of the network resources.

With reference to the third aspect, in some implementations of the third aspect, the first indication information includes synchronization signal block SSB information of the target satellite device, and the SSB information is used by the first terminal device to perform downlink synchronization with the target satellite device. According to the foregoing technical solution, in the process of handover from the source satellite to the target satellite, all the terminal devices in the cell can be prevented from being handed over in the same period of time, to reduce the occupation of the network resources.

With reference to the third aspect, in some implementations of the third aspect, the second indication information includes change information of a synchronization signal block SSB of the source satellite device, and the change information of the SSB includes at least one of the following: change information of an SSB periodicity, an SSB offset, and change information of an SSB pattern. According to the foregoing technical solution, in the process of handover from the source satellite to the target satellite, all the terminal devices in the cell can be prevented from being handed over in the same period of time, to reduce the occupation of the network resources.

With reference to the third aspect, in some implementations of the third aspect, the first indication information further includes at least one of the following: ephemeris information of the target satellite device, beam information of the target satellite device, and resource configuration information of the target satellite device for the first terminal device.

According to the foregoing technical solution, in the process of handover from the source satellite to the target satellite, all the terminal devices in the cell can be prevented from being handed over in the same period of time, to reduce the occupation of the network resources.

With reference to the third aspect, in some implementations of the third aspect, the SSB information includes at least one of the following: an SSB transmission periodicity, an SSB transmission time, an SSB offset, and an SSB transmission pattern. According to the foregoing technical solution, in the process of handover from the source satellite to the target satellite, all the terminal devices in the cell can be prevented from being handed over in the same period of time, to reduce the occupation of the network resources.

With reference to the third aspect, in some implementations of the third aspect, both the first indication information and the second indication information are SSB-based measurement timing configurations SMTCs. According to the foregoing technical solution, in the process of handover from the source satellite to the target satellite, all the terminal devices in the cell can be prevented from being handed over in the same period of time, to reduce the occupation of the network resources.

With reference to the third aspect, in some implementations of the third aspect, the obtaining the first information further includes: receiving the first information sent by the target satellite device. According to the foregoing technical solution, in the process of handover from the source satellite to the target satellite, all the terminal devices in the cell can be prevented from being handed over in the same period of time, to reduce the occupation of the network resources.

According to a fourth aspect, a communication method is provided. The method is performed by a target satellite device. The target satellite device herein may be a target satellite device, or may be a processor, a module, a chip, a chip system, or the like that is in the target satellite device and that implements the method. The method includes: sending first information to a source satellite device, where the first information indicates that a service satellite in a first area is to be changed from the source satellite device to the target satellite device, and the first area is a part of a service area of the source satellite device.

According to the technical solution of this application, the target satellite device sends the first information to the source satellite device, to indicate that the first area is to be taken over by the target satellite device, so that the source satellite device sends different indication information to terminal devices in different areas. In this way, in a process of handover from the source satellite to the target satellite, all terminal devices in a cell can be prevented from being handed over in a same period of time, to reduce occupation of network resources.

According to a fifth aspect, a communication method is provided. The method may be performed by a first terminal device. The first terminal device herein may be a first terminal device, or may be a processor, a module, a chip, or a chip system that is in the first terminal device and that implements the method. The method includes: receiving first indication information sent by a source satellite device, where the first indication information indicates the first terminal device to establish a communication connection to a target satellite device; and establishing the communication connection to the target satellite device based on the first indication information, where the first terminal device is located in a first area, and the first area is a part of a service area of the source satellite device.

According to the technical solution of this application, the first terminal device receives the first indication information sent by the source satellite device, and establishes the communication connection to the target satellite device based on the first indication information, where the first terminal device is located in the first area, and the first area is the part of the service area of the source satellite. According to the foregoing technical solution, the first terminal device is handed over to the target satellite device based on the first indication information, so that only the first terminal device is handed over to the target satellite device, and all terminal devices in a cell are prevented from being handed over in a same period of time, to reduce occupation of network resources.

With reference to the fifth aspect, in some implementations of the fifth aspect, the method further includes: receiving third indication information sent by the source satellite device, where the third indication information includes first service time information, where the first service time information indicates an end time point at which the source satellite device serves the first terminal device, or the first service time information indicates a start time point at which the target satellite device serves the first terminal device. According to the foregoing technical solution, all the terminal devices in the cell can be prevented from being handed over in the same period of time, to reduce the occupation of the network resources.

With reference to the fifth aspect, in some implementations of the fifth aspect, the first indication information includes synchronization signal block SSB information of the target satellite device, and the SSB information is used by the first terminal device to perform downlink synchronization with the target satellite device. According to the foregoing technical solution, the first terminal device can complete the downlink synchronization with the target satellite device, and establish communication with the target satellite device, so that all the terminal devices in the cell are prevented from being handed over in the same period of time, and the occupation of network resources is reduced.

With reference to the fifth aspect, in some implementations of the fifth aspect, the first indication information further includes at least one of the following: ephemeris information of the target satellite device, beam information of the target satellite device, and resource configuration information of the target satellite device for the first terminal device. According to the foregoing technical solution, the first terminal device can complete the downlink synchronization with the target satellite device, and establish communication with the target satellite device, so that all the terminal devices in the cell are prevented from being handed over in the same period of time, and the occupation of network resources is reduced.

With reference to the fifth aspect, in some implementations of the fifth aspect, the SSB information includes at least one of the following: an SSB transmission periodicity, an SSB transmission time, an SSB offset, and an SSB transmission pattern. According to the foregoing technical solution, the first terminal device can complete the downlink synchronization with the target satellite device, and establish communication with the target satellite device, so that all the terminal devices in the cell are prevented from being handed over in the same period of time, and the occupation of network resources is reduced.

With reference to the fifth aspect, in some implementations of the fifth aspect, the first indication information is an SSB-based measurement timing configuration SMTC. According to the foregoing technical solution, all the terminal devices in the cell can be prevented from being handed over in the same period of time, to reduce the occupation of the network resources.

According to a sixth aspect, a communication method is provided. The method is performed by a second terminal device. The second terminal device herein may be a second terminal device, or may be a processor, a module, a chip, or a chip system that is in the second terminal device and that implements the method. The method includes: receiving second indication information sent by a source satellite device, where the second indication information indicates the second terminal device to communicate with the source satellite device; and communicating with the source satellite device based on the second indication information. The second terminal device is located in a service area other than a first area in a service area of the source satellite device, and the first area is a part of the service area of the source satellite device.

According to the technical solution of this application, the second terminal device receives the second indication information sent by the source satellite device, and communicates with the source satellite device based on the second indication information. The second terminal device is located in the service area other than the first area in the service area of the source satellite device, and the first area is the part of the service area of the source satellite. According to the foregoing technical solution, the second terminal device communicates with the source satellite device based on the second indication information, so that the second terminal device can be prevented from being handed over to a target satellite device, to prevent all terminal devices in a cell from being handed over in a same period of time, and reduce occupation of network resources.

With reference to the sixth aspect, in some implementations of the sixth aspect, the second indication information includes change information of a synchronization signal block SSB of the source satellite device, and the change information of the SSB includes at least one of the following: change information of an SSB periodicity, an SSB offset, and change information of an SSB pattern. According to the foregoing technical solution, the second terminal device communicates with the source satellite device based on the change information of the SSB, so that all the terminal devices in the cell can be prevented from being handed over in the same period of time, to reduce the occupation of the network resources.

With reference to the sixth aspect, in some implementations of the sixth aspect, the second indication information is an SSB-based measurement timing configuration SMTC. According to the foregoing technical solution, all the terminal devices in the cell can be prevented from being handed over in the same period of time, to reduce the occupation of the network resources.

According to a seventh aspect, a communication apparatus is provided. The communication apparatus includes: a processing unit, configured to obtain first service time information, where the first service time information corresponds to a first synchronization signal block SSB index; and the processing unit is configured to establish a communication connection to a target satellite device based on the first service time information, where the first service time information indicates an end time point at which a source satellite device serves a terminal device, or the first service time information indicates a start time point at which the target satellite device serves a terminal device.

With reference to the seventh aspect, in some implementations of the seventh aspect, the communication apparatus further includes: a transceiver unit, configured to receive the first SSB index sent by the source satellite device; and the processing unit is specifically configured to determine the first service time information based on the first SSB index.

With reference to the seventh aspect, in some implementations of the seventh aspect, the transceiver unit is further configured to receive a first correspondence sent by the source satellite device, where the first correspondence includes a correspondence between at least one SSB index and at least one service time; and the processing unit is specifically configured to determine, as the first service time information, service time information corresponding to the first SSB index in the first correspondence.

With reference to the seventh aspect, in some implementations of the seventh aspect, the processing unit is further configured to receive a first SSB message, where the first SSB message includes the first service time information.

With reference to the seventh aspect, in some implementations of the seventh aspect, the at least one SSB index corresponding to the first service time information forms a first SSB index set, and at least one terminal device corresponding to the at least one SSB index included in the first SSB index set forms a first terminal group.

With reference to the seventh aspect, in some implementations of the seventh aspect, a time difference between an end time point at which the source satellite device serves the first terminal group and an end time point at which the source satellite device serves the at least one terminal device is less than a first preset value; or a time difference between a start time point at which the target satellite device serves the first terminal group and a start time point at which the target satellite device serves the at least one terminal device is less than a second preset value.

With reference to the seventh aspect, in some implementations of the seventh aspect, the first terminal group corresponds to a first geographical location area, the at least one terminal device is located in the first geographical location area, and the first geographical location area is a service area of the target satellite device.

According to an eighth aspect, a communication apparatus is provided. The communication apparatus includes: a transceiver unit, configured to send a first synchronization signal block SSB index to a terminal device, where the first SSB index is used by the terminal device to determine first service time information; or the transceiver unit is configured to send a first SSB message to the terminal device, where the first SSB message includes the first service time information, where the first service time information indicates an end time point at which a source satellite device serves the terminal device, or the first service time information indicates a start time point at which a target satellite device serves the terminal device.

With reference to the eighth aspect, in some implementations of the eighth aspect, the transceiver unit is further configured to send a first correspondence to the terminal device, where the first correspondence includes a correspondence between at least one SSB index and at least one service time. That the first SSB index is used by the terminal device to determine the first service time information includes: The first SSB index is used by the terminal device to determine, as the first service time information, service time information corresponding to the first SSB index in the first correspondence.

With reference to the eighth aspect, in some implementations of the eighth aspect, the at least one SSB index corresponding to the first service time information forms a first SSB index set, and at least one terminal device corresponding to the at least one SSB index included in the first SSB index set forms a first terminal group.

With reference to the eighth aspect, in some implementations of the eighth aspect, a time difference between an end time point at which the source satellite device serves the first terminal group and an end time point at which the source satellite device serves the at least one terminal device is less than a first preset value; or a time difference between a start time point at which the target satellite device serves the first terminal group and a start time point at which the target satellite device serves the at least one terminal device is less than a second preset value.

With reference to the eighth aspect, in some implementations of the eighth aspect, the first terminal group corresponds to a first geographical location area, the at least one terminal device is located in the first geographical location area, and the first geographical location area is a service area of the target satellite device.

According to a ninth aspect, a communication apparatus is provided. The communication apparatus includes: a processing unit, configured to obtain first information, where the first information indicates that a service satellite in a first area is to be changed from a source satellite device to a target satellite device, and the first area is a part of a service area of the source satellite device; and a transceiver unit, configured to send first indication information to a first terminal device, where the first indication information indicates the first terminal device to establish a communication connection to the target satellite device, and the first terminal device is located in the first area; and/or the transceiver unit is configured to send second indication information to a second terminal device, where the second indication information indicates the second terminal device to communicate with the source satellite device, and the second terminal device is located in a service area other than the first area in the service area of the source satellite device.

With reference to the ninth aspect, in some implementations of the ninth aspect, the transceiver unit is further configured to send third indication information to the first terminal device, where the third indication information includes first service time information, where the first service time information indicates an end time point at which the source satellite device serves the first terminal device, or the first service time information indicates a start time point at which the target satellite device serves the first terminal device.

With reference to the ninth aspect, in some implementations of the ninth aspect, the first indication information includes synchronization signal block SSB information of the target satellite device, and the SSB information is used by the first terminal device to perform downlink synchronization with the target satellite device.

With reference to the ninth aspect, in some implementations of the ninth aspect, the second indication information includes change information of a synchronization signal block SSB of the source satellite device, and the change information of the SSB includes at least one of the following: change information of an SSB periodicity, an SSB offset, and change information of an SSB pattern.

With reference to the ninth aspect, in some implementations of the ninth aspect, the first indication information further includes at least one of the following: ephemeris information of the target satellite device, beam information of the target satellite device, and resource configuration information of the target satellite device for the first terminal device.

With reference to the ninth aspect, in some implementations of the ninth aspect, the SSB information includes at least one of the following: an SSB transmission periodicity, an SSB transmission time, an SSB offset, and an SSB transmission pattern.

With reference to the ninth aspect, in some implementations of the ninth aspect, both the first indication information and the second indication information are SSB-based measurement timing configurations SMTCs.

With reference to the ninth aspect, in some implementations of the ninth aspect, the processing unit is further configured to receive the first information sent by the target satellite device.

According to a tenth aspect, a communication apparatus is provided. The communication apparatus includes: a transceiver unit, configured to send first information to a source satellite device, where the first information indicates that a service satellite in a first area is to be changed from the source satellite device to a target satellite device, and the first area is a part of a service area of the source satellite device.

According to an eleventh aspect, a communication apparatus is provided. The communication apparatus includes: a transceiver unit, configured to receive first indication information sent by a source satellite device, where the first indication information indicates a first terminal device to establish a communication connection to a target satellite device; and a processing unit, configured to establish the communication connection to the target satellite device based on the first indication information, where the first terminal device is located in a first area, and the first area is a part of a service area of the source satellite device.

With reference to the eleventh aspect, in some implementations of the eleventh aspect, the transceiver unit is further configured to receive third indication information sent by the source satellite device, where the third indication information includes first service time information, where the first service time information indicates an end time point at which the source satellite device serves the first terminal device, or the first service time information indicates a start time point at which the target satellite device serves the first terminal device.

With reference to the eleventh aspect, in some implementations of the eleventh aspect, the first indication information includes synchronization signal block SSB information of the target satellite device, and the SSB information is used by the first terminal device to perform downlink synchronization with the target satellite device.

With reference to the eleventh aspect, in some implementations of the eleventh aspect, the first indication information further includes at least one of the following: ephemeris information of the target satellite device, beam information of the target satellite device, and resource configuration information of the target satellite device for the first terminal device.

With reference to the eleventh aspect, in some implementations of the eleventh aspect, the SSB information includes at least one of the following: an SSB transmission periodicity, an SSB transmission time, an SSB offset, and an SSB transmission pattern.

With reference to the eleventh aspect, in some implementations of the eleventh aspect, the first indication information is an SSB-based measurement timing configuration SMTC.

According to a twelfth aspect, a communication apparatus is provided. The communication apparatus includes: a transceiver unit, configured to receive second indication information sent by a source satellite device, where the second indication information indicates a second terminal device to communicate with the source satellite device; and a processing unit, configured to communicate with the source satellite device based on the second indication information. The second terminal device is located in a service area other than a first area in a service area of the source satellite device, and the first area is a part of the service area of the source satellite device.

With reference to the twelfth aspect, in some implementations of the twelfth aspect, the second indication information includes change information of a synchronization signal block SSB of the source satellite device, and the change information of the SSB includes at least one of the following: change information of an SSB periodicity, an SSB offset, and change information of an SSB pattern.

With reference to the twelfth aspect, in some implementations of the twelfth aspect, the second indication information is an SSB-based measurement timing configuration SMTC.

According to a thirteenth aspect, a communication apparatus is provided, and includes at least one processor. The at least one processor is coupled to at least one memory, and the at least one processor is configured to execute a computer program or instructions stored in the at least one memory, to cause the communication apparatus to perform the method according to any one of the first aspect or the possible implementations of the first aspect.

According to a fourteenth aspect, a communication apparatus is provided, and includes at least one processor. The at least one processor is coupled to at least one memory, and the at least one processor is configured to execute a computer program or instructions stored in the at least one memory, to cause the communication apparatus to perform the method according to any one of the second aspect or the possible implementations of the second aspect, or the method according to any one of the third aspect or the possible implementations of the third aspect.

According to a fifteenth aspect, a communication apparatus is provided, and includes at least one processor. The at least one processor is coupled to at least one memory, and the at least one processor is configured to execute a computer program or instructions stored in the at least one memory, to cause the communication apparatus to perform the method according to the fourth aspect.

According to a sixteenth aspect, a communication apparatus is provided, and includes at least one processor. The at least one processor is coupled to at least one memory, and the at least one processor is configured to execute a computer program or instructions stored in the at least one memory, to cause the communication apparatus to perform the method according to any one of the fifth aspect or the possible implementations of the fifth aspect.

According to a seventeenth aspect, a communication apparatus is provided, and includes at least one processor. The at least one processor is coupled to at least one memory, and the at least one processor is configured to execute a computer program or instructions stored in the at least one memory, to cause the communication apparatus to perform the method according to any one of the sixth aspect or the possible implementations of the sixth aspect.

According to an eighteenth aspect, a computer-readable storage medium is provided. The computer-readable storage medium stores computer instructions, and when the computer instructions are run on a computer, the computer is caused to perform the communication methods according to the foregoing aspects.

According to a nineteenth aspect, a computer program product including instructions is provided. When the computer program product runs on a computer, the methods according to the foregoing aspects are performed.

According to a twentieth aspect, a chip system is provided. The chip system includes a processor, configured to invoke a computer program or instructions from a memory and run the computer program or the instructions, to cause a communication apparatus in which the chip system is installed to implement the methods according to the foregoing aspects.

### BRIEF DESCRIPTION OF DRAWINGS

FIG. 1 is a diagram of an architecture of a communication system to which an embodiment of this application is applicable;
FIG. 2 is a diagram of a network application architecture of a communication system to which an embodiment of this application is applicable;
FIG. 3 is a schematic flowchart of a communication method according to an embodiment of this application;
FIG. 4 is a schematic flowchart of a communication method according to another embodiment of this application;
FIG. 5 is a schematic flowchart of a communication method according to another embodiment of this application;
FIG. 6 is a diagram of a communication apparatus according to an embodiment of this application; and
FIG. 7 is a diagram of a communication apparatus according to an embodiment of this application.

### DESCRIPTION OF EMBODIMENTS

The following describes technical solutions of this application with reference to the accompanying drawings.

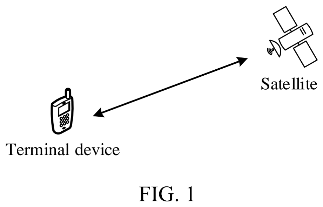

FIG. 1 is a diagram of an architecture of a communication system to which an embodiment of this application is applicable. As shown in FIG. 1, the communication system may include at least one communication apparatus, for example, a satellite device shown in FIG. 1. The communication system may further include at least one terminal device, for example, a terminal device shown in FIG. 1. The satellite device may communicate with the terminal device through a radio link.

The technical solutions in embodiments of this application may be applied to various communication systems, such as a global system for mobile communication (global system for mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, a device-to-device (device-to-device, D2D) communication system, a machine communication system, an internet of vehicles communication system, a satellite communication system, or a future communication system.

The terminal device in embodiments of this application may be a user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may alternatively be a satellite phone, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

The communication apparatus in embodiments of this application may be a device configured to communicate with the terminal device, for example, may be any device having a wireless transceiver function. The network device may be a base station (base transceiver station, BTS) in a global system for mobile communications (global system for mobile communications, GSM) or code division multiple access (code division multiple access, CDMA), or may be a base station (NodeB, NB) in a wideband code division multiple access (wideband code division multiple access, WCDMA) system, or may be an evolved NodeB (evolved NodeB, eNB, or eNodeB) in an LTE system, including but not limited to a base station controller (base station controller, BSC), a base transceiver station (base transceiver station, BTS), and the like. Alternatively, the network device may be a radio controller in a cloud radio access network (cloud radio access network, CRAN) scenario, or the network device may be a relay station, an access point, a vehicle-mounted device, a wearable device, a terminal that functions as a base station in D2D communication or machine-to-machine communication, a network device in a 5G network, a network device in a future evolved PLMN network, or the like, or may be one antenna panel or a group of antenna panels (including a plurality of antenna panels) of a base station in a 5G system or the like, or may be a satellite device or the like. This is not limited in embodiments of this application.

The following uses the satellite communication system as an example to describe the technical solutions of this application in detail. In the satellite communication system, the communication apparatus may include a satellite device, or the communication apparatus may include an apparatus deployed on a satellite device, or the communication apparatus may include an apparatus deployed on a high-altitude platform, for example, an airplane, an unmanned aerial vehicle, or a balloon.

For ease of understanding of embodiments of this application, the following first describes concepts in embodiments.

### 1. Satellite communication

The satellite communication system includes three parts: a satellite end, a terrestrial end, and a user end. In the previous satellite communication system, the satellite end functions as a relay station in the air. To be specific, the satellite end amplifies electromagnetic waves sent by a terrestrial station and sends the electromagnetic waves back to another terrestrial station. A satellite body also includes two subsystems: an onboard device and a satellite precursor. The terrestrial station is an interface between the satellite system and a terrestrial public network. A terrestrial user can enter and exit the satellite system through the terrestrial station to form a link. The terrestrial station further includes a terrestrial satellite control center and tracking, telemetering, and instruction stations thereof. There are various user terminal devices on the user end.

Satellite communication is increasingly used in various fields. In addition to finance, securities, post and telecommunications, meteorology, and earthquake departments, the satellite communication will be widely used in remote education, telemedicine, emergency relief, emergency communication, emergency television broadcasting, sea, land, and air navigation, Internet-connected network phones and televisions, and the like.

To implement more flexible networking, a cellular technology will be used in the satellite communication. For example, a base station (base station, BS) is moved to a satellite.

### 2. Synchronization

In the satellite communication, the terminal device needs to first implement time synchronization with the network device. In a case of synchronization, the network device and the terminal device may parse out specific content included in a signal according to a pre-agreed protocol. The terminal device first needs to detect a primary synchronization signal. NR is used as an example. In a synchronization process, the network device sends a synchronization signal block (synchronization signal block, SSB) beam, the terminal device performs wide beam sweeping, and after both a UE and a BS perform sweeping, a narrow beam range of the network device and a wide beam of the terminal device are determined. For example, in an NR system, a repetition periodicity of an SSB may be 5 ms, and each periodicity includes one SSB. Therefore, the terminal device may obtain 5 ms timing of a cell by capturing a primary synchronization signal (primary synchronization signal, PSS).

### 3. Random access (random access, RA)

The random access is an information exchange mechanism (or process) used to establish a connection between a device that does not access a network and the network in a communication system with access control, for example, an LTE system or a 5G system. Because a random access process is performed on a random access channel (random access channel, RACH), the RA and the RACH are often mixed in protocols and oral language. The random access is classified into contention-based random access and contention-free random access. The contention-based random access usually includes four steps, and each step corresponds to a message. A message 1, a message 2, a message 3, and a message 4 are included, and respectively carry different signaling or information. The contention-free random access includes only the first two steps. In addition, to reduce access time of the four-step contention-based random access, two-step random access is further provided. The two-step random access includes a message A and a message B. The message A includes a preamble and a first piece of data information (similar to the message 1 and the message 3 in the four-step random access), and the message B includes contention resolution and uplink scheduling (similar to the message 2 and the message 4 in the four-step random access).

It should be understood that the foregoing related descriptions of the satellite communication, the downlink synchronization, the random access, and the like are merely intended to facilitate understanding of the technical solutions of this application, and do not constitute any limitation on this application.

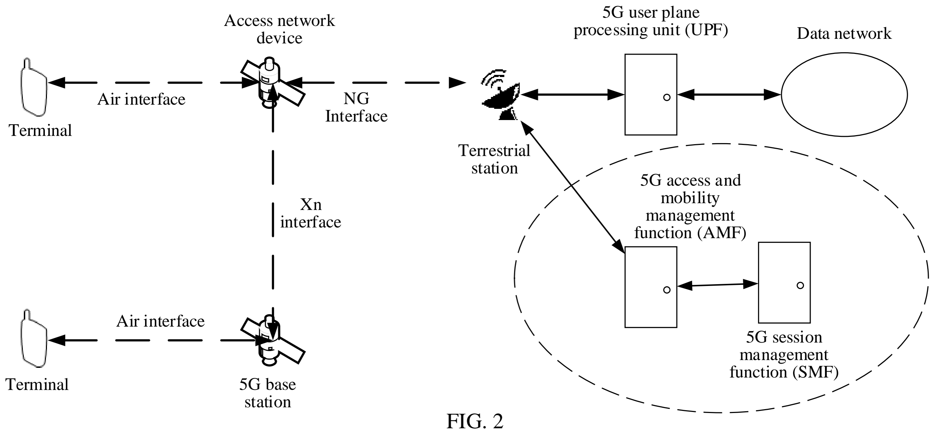

In addition, the solutions provided in this application are applied to the field of satellite communication, for example, members of 3GPP integrate satellite communication and 5G technologies. FIG. 2 shows a network application architecture of the technology. A terrestrial mobile terminal UE accesses a network through an air interface (the air interface may be various types of air interfaces, for example, a 5G air interface). An access network device may be deployed on a satellite, or deployed on the ground, and is connected to a core network on the ground through a radio link. In addition, a radio link exists between satellites, to complete signaling exchange and user data transmission between access network devices. Network elements and interfaces of the network elements in FIG. 2 are described as follows:

A terminal device is a mobile device that supports 5G new radio, and is typically a mobile device like a mobile phone and a pad. The terminal device may access a satellite network through an air interface and initiate services such as a call or network access.

An access network device mainly provides radio access services, schedules radio resources to an access terminal, and provides reliable wireless transmission protocols and data encryption protocols.

A 5G core network provides services such as user access control, mobility management, session management, user security authentication, and charging. The 5G core network includes a plurality of function units, and can be classified into a control-plane function entity and a data-plane function entity. An access and mobility management unit (AMF) is responsible for user access management, security authentication, and mobility management. A user plane unit (UPF) is responsible for managing functions such as user plane data transmission and traffic statistics.

A terrestrial station is responsible for forwarding signaling and service data between a satellite base station and the 5G core network.

5G new radio is the radio link between the terminal and the base station.

An Xn interface is an interface between a 5G base station and the base station, and is mainly for signaling exchange such as handover.

An NG interface is an interface between the 5G base station and the 5G core network, and is mainly for exchanging NAS signaling or the like of the core network and service data of a user.

This application is applied to a communication system such as 5G, and relates to radio access network elements such as a UE, a base station, and a terrestrial station, to perform uplink and downlink data communication according to a wireless communication protocol.

In embodiments of this application, the access network device is not limited to a satellite base station, and the access network device may alternatively be deployed on a high-altitude platform, a satellite, the ground, or the like.

In an existing satellite communication technology, for example, when a satellite 2 takes over a cell 2, a satellite 1 (a source satellite) broadcasts service time information (for example, a t-service 1) to all user equipments in the cell 2, to indicate a time point at which the satellite 2 takes over the cell 2. When the time point indicated by the service time information (the t-service 1) reaches, almost all the user equipments in the cell 2 are handed over to the satellite 2 in a same period of time, and a large amount of handover signaling is generated in a handover process, occupying a large quantity of network resources.

Based on this, this application is intended to provide a communication method, to prevent all user equipments in a cell from being handed over in a same period of time in a process of handover from a source satellite to a target satellite, so as to reduce occupation of network resources.

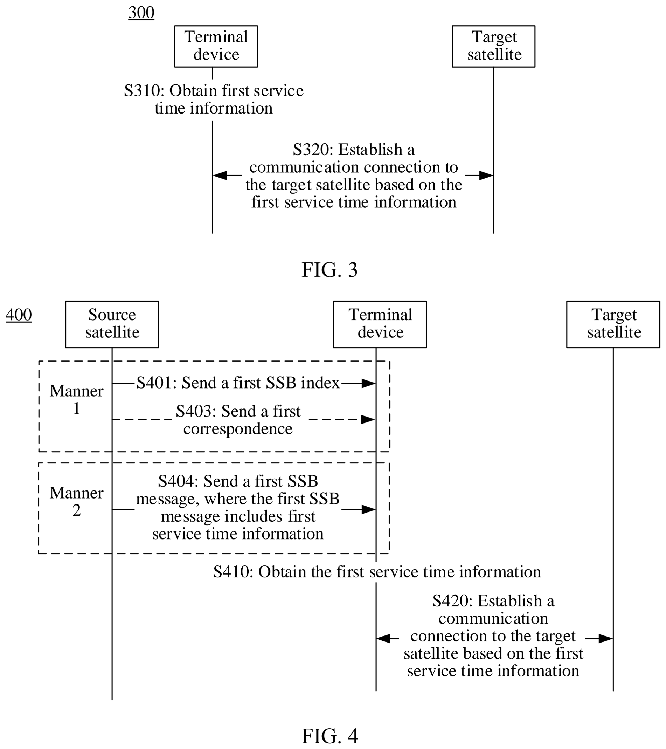

FIG. 3 is a schematic flowchart of a communication method 300 according to an embodiment of this application. As shown in FIG. 3, the method may include at least the following steps.

S310: A terminal device obtains first service time information.

S320: The terminal device establishes a communication connection to a target satellite device based on the first service time information.

The first service time information corresponds to a first SSB index, and the first service time information indicates an end time point at which a source satellite device serves the terminal device, or the first service time information indicates a start time point at which the target satellite device serves the terminal device.

It should be noted that, that the first service time information corresponds to the first SSB index may be understood as that there is a one-to-one correspondence between the first service time information and the first SSB index, or there is a one-to-many correspondence between the first service time information and the first SSB index. That the first service time information corresponds to the first SSB index may alternatively be understood as that the first service time information corresponds to a first SSB message, that is, the first service time information is in one-to-one correspondence with the first SSB message. For example, different SSB messages correspond to different first service time information. Alternatively, there is a one-to-many correspondence between the first service time information and the first SSB message, where the first SSB message is an SSB message that can be received at a location of the terminal device.

It should be further noted that, in a possible implementation, the first service time information may indicate a period of time, for example, 1 hour. This may be understood as that the first service time information indicates that there is 1 hour before the source satellite device ends providing the service for the terminal device, or the first service time information indicates that there is 1 hour before the target satellite device starts providing the service for the terminal device, or the first indication information indicates that service duration in which the source satellite device provides the service for the terminal device is 1 hour.

It should be further noted that, in a possible implementation, the first service time information may indicate a time point, for example, 10 o'clock. This may be understood as that the first service time information indicates that the end time point at which the source satellite device provides the service for the terminal device is 10 o'clock, or the first service time information indicates that the start time point at which the target satellite device provides the service for the terminal device is 10 o'clock.

Specifically, before step S320, the method may further include: The source satellite device sends SSB information of the target satellite device to the terminal device, and correspondingly, the terminal device receives the SSB information of the target satellite device sent by the source satellite device. The SSB information may be at least one of an SSB sending periodicity of the target satellite device, an SSB sending time point of the target satellite device, an SSB offset of the target satellite device, and an SSB sending pattern of the target satellite device.

Specifically, after receiving the SSB information of the target satellite device, the terminal device performs downlink synchronization with the target satellite device based on the SSB information. After the terminal device completes the downlink synchronization with the target satellite device, the terminal device establishes the communication connection to the target satellite device based on the first service time information.

For example, when the first service time information indicates a period of time (for example, 1 hour), the first service time information indicates that there is 1 hour before the source satellite device ends providing the service for the terminal device, or the first service time information indicates that there is 1 hour before the target satellite device starts providing the service for the terminal device. Then, the terminal device initiates random access to the target satellite device at an end moment of the period of time (1 hour) indicated by the first service time information, to establish the communication connection to the target satellite device.

For another example, when the first service time information indicates a time point (for example, 10 o'clock), the first service time information indicates that the end time point at which the source satellite device provides the service for the terminal device is 10 o'clock, or the first service time information indicates that the start time point at which the target satellite device provides the service for the terminal device is 10 o'clock. Then, the terminal device initiates random access to the target satellite device when a time point reaches 10 o'clock, to establish the communication connection to the target satellite device.

It should be noted that for specific steps of a random access procedure, refer to the conventional technology. For brevity, details are not described herein in this application.

It should be noted that the terminal device obtains the first service time information roughly in the following two manners (a manner 1 and a manner 2 described below). The following describes in detail the manners of obtaining the first service time information by the terminal device with reference to FIG. 4. For brevity, in the following descriptions, only differences from the foregoing embodiments are described in detail.

FIG. 4 is a schematic flowchart of a communication method 400 according to another embodiment of this application. As shown in FIG. 4, the method includes at least the following steps.

S410: A terminal device obtains first service time information.

S420: The terminal device establishes a communication connection to a target satellite device based on the first service time information.

It should be noted that step S410 and step S420 are similar to step S310 and step S320 described above. For brevity, details are not described herein again in this application.

Manner 1: Before step S410, the method may further include: S401: A source satellite device sends a first SSB index to the terminal device, and correspondingly, the terminal device receives the first SSB index sent by the source satellite device. Alternatively, S410 described above may be step S402: The terminal device determines the first service time information based on the first SSB index.

Specifically, the terminal device receives the first SSB index (for example, an SSB index 1) sent by the source satellite device. In this case, the terminal device determines, based on the SSB index 1 from a preconfigured correspondence, the first service time information (for example, a t-service 1) corresponding to the SSB index 1.

It should be noted that the correspondence preconfigured by the terminal device may be specifically a correspondence between an SSB index and service time information. The correspondence may be a one-to-one correspondence between the SSB index and the service time information. For example, the SSB index 1 corresponds to the t-service 1, and an SSB index 2 corresponds to a t-service 2. Alternatively, the correspondence may be a correspondence between a plurality of SSB indexes and one piece of service time information. For example, the SSB index 1 corresponds to the t-service 1, and an SSB index 2 also corresponds to the t-service 1. It should be understood that this is not limited in this embodiment of this application.

Optionally, in a possible implementation, before step S410, the method may further include: S403: The source satellite device sends a first correspondence to the terminal device, and correspondingly, the terminal device receives the first correspondence sent by the source satellite device. Alternatively, step S402 may be step S403: The terminal device determines, as the first service time information, service time information corresponding to the first SSB index in the first correspondence.

Specifically, the first correspondence includes a correspondence between at least one SSB index and at least one piece of service time information. This may be understood as that the first correspondence may be a correspondence between a plurality of SSB indexes and one piece of service time information. For example, the SSB index 1 corresponds to the t-service 1, and the SSB index 2 also corresponds to the t-service 1. Alternatively, the first correspondence may be a one-to-one correspondence between an SSB index and service time information. For example, the SSB index 1 corresponds to the t-service 1, and the SSB index 2 corresponds to the t-service 2.

For example, an example in which the first correspondence is the one-to-one correspondence between the SSB index and the service time infromation is used for description. Specifically, the terminal device receives the first SSB index (for example, the SSB index 1) sent by the source satellite device. In addition, the terminal device receives the first correspondence sent by the source satellite device. The terminal device determines, based on the received first SSB index (the SSB index 1), the service time information (for example, the t-service 1) that is in the first correspondence and that corresponds to the first SSB index (the SSB index 1) as the first service time information.

It should be noted that the source satellite device may send the first correspondence to the terminal device in a broadcast manner, or the source satellite device may send the first correspondence to the terminal device in a unicast or multicast manner. For example, the source satellite device may send the first correspondence by using radio resource control (radio resource control, RRC), or the source satellite device may send the first correspondence by using downlink control information (downlink control information, DCI), or the source satellite device may send the first correspondence by using a MAC control element (MAC control element, MAC CE). It should be understood that a manner in which the source satellite device sends the first correspondence is not limited in this embodiment of this application.

It should be further noted that step S403 may be performed before step S401, or may be performed after step S401 and before step S420. It should be understood that an execution sequence is not limited in this embodiment of this application.

Manner 2: Before step S410, the method may further include: S404: The source satellite device sends a first SSB message to the terminal device, and correspondingly, the terminal device receives the first SSB message, where the first SSB message includes the first service time information.

Specifically, the source satellite device sends the first SSB message to the terminal device by using a beam. Different SSB indexes correspond to different geographical location areas. In other words, SSB indexes (first SSB messages) received by terminal devices in different geographical location areas are also different.

For example, the terminal device (for example, a UE 1) receives the first SSB message (for example, an SSB message 1) sent by the source satellite device. The SSB message 1 includes the first service time information (for example, a t-service 1). In this case, the UE 1 obtains the first service time information that is the t-service 1.

For another example, the terminal device (for example, a UE 2) receives the first SSB message (for example, an SSB message 2) sent by the source satellite device. The SSB message 2 includes the first service time information (for example, a t-service 2). In this case, the UE 2 obtains the first service time information that is the t-service 2.

Optionally, in a possible implementation, the at least one SSB index corresponding to the first service time information forms a first SSB index set, and at least one terminal device corresponding to the at least one SSB index included in the first SSB index set forms a first terminal group.

For example, it is assumed that SSB indexes corresponding to the first service time information (the t-service 1) are an SSB index 1, an SSB index 2, an SSB index 3, and an SSB index 4. In this case, the four SSB indexes jointly form a first SSB index set, and terminal devices (a UE 1, a UE 2, a UE 3, and a UE 4) respectively corresponding to the four SSB indexes form a first terminal group.

The following uses the first terminal group as an example to describe in detail the communication method provided in the another embodiment of this application.

Optionally, in a possible implementation, the method may include: The source satellite device sends the first correspondence to the first terminal group, and correspondingly, the first terminal group receives the first correspondence. The source satellite device sends the first SSB index set to the first terminal group, and correspondingly, the first terminal group receives the first SSB index set.

Specifically, the first correspondence includes a correspondence between a plurality of first SSB indexes (the first SSB index set) and the first service time information (the t-service 1). In other words, all the first SSB indexes (the SSB index 1 to the SSB index 4) in the first SSB index set correspond to the t-service 1.

That the source satellite device sends the first SSB index set to the first terminal group may be understood as that the source satellite device sends the first SSB index to all terminal devices in the first terminal group. Correspondingly, the terminal devices in the first terminal group receive the first SSB index. For example, the UE 1 receives the SSB index 1, the UE 2 receives the SSB index 2, the UE 3 receives the SSB index 3, and the UE 4 receives the SSB index 4. The terminal devices in the first terminal group determine, based on the received first correspondence, that the corresponding first service time information is the t-service 1.

Then, the terminal devices in the first terminal group establish communication connections to the target satellite device based on the first service time information (the t-service 1). First service time information corresponding to all the terminal devices in the first terminal group is the same, and is the t-service 1. This may be understood as that four terminal devices (the UE 1 to the UE 4) in the first terminal group are handed over from the source satellite device to the target satellite device in a same period of time.

Optionally, in a possible implementation, the method may further include: The source satellite device sends the first SSB message to the first terminal group, and correspondingly, the first terminal group receives the first SSB message, where the first SSB message includes the first service time information (the t-service 1).

Specifically, the source satellite device sends the first SSB message to the terminal devices in the first terminal group, where the first SSB message includes the first service time information (the t-service 1), and the terminal devices in the first terminal group establish the communication connections to the target satellite device based on the received first service time information (the t-service 1). First service time information received by the terminal devices in the first terminal group is the same, and is the t-service 1. This may be understood as that four terminal devices (the UE 1 to the UE 4) in the first terminal group are handed over from the source satellite device to the target satellite device in a same period of time.

It should be noted that there may be a plurality of bases for grouping terminal devices in a large-scale cell.

For example, a time difference between an end time point at which the source satellite device can serve for the first terminal group and an end time point at which the source satellite device can serve for the at least one terminal device in the first terminal group is less than a first preset value.

It should be understood that the first preset value is a preset time difference range, and may be understood as that a remaining service time in which the source satellite device can provide the service for the first terminal group is basically equal to a remaining service time in which the source satellite device can provide the service for the at least one terminal device in the first terminal group.

For another example, it is assumed that a geographical area location of the first terminal group is a first geographical location area, and the first geographical location area is a service area of a target terminal device. When at least one terminal device is located in the first geographical location area, the at least one terminal device belongs to the first terminal group.

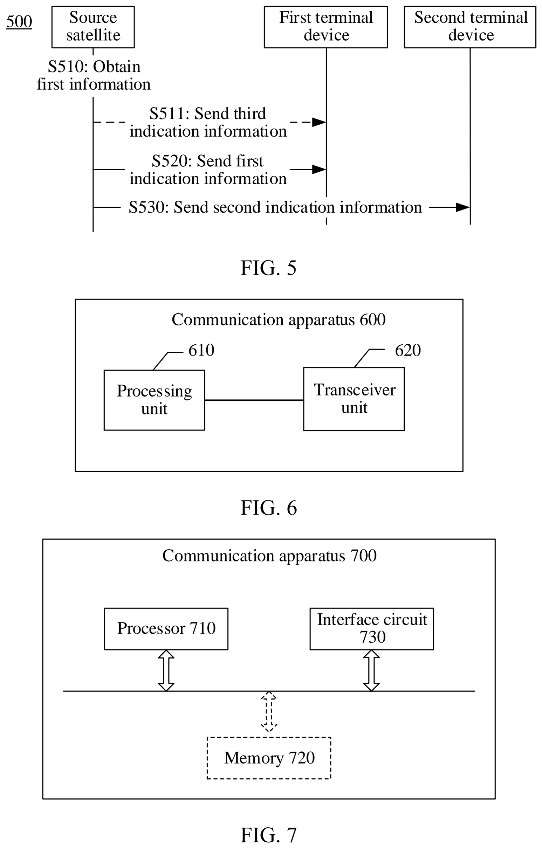

FIG. 5 is a schematic flowchart of a communication method 500 according to another embodiment of this application. As shown in FIG. 5, the method includes at least the following steps.

S510: A source satellite device obtains first information, where the first information indicates that a service satellite in a first area is to be changed from the source satellite device to a target satellite device, and the first area is a part of a service area of the source satellite device.

Specifically, after the source satellite device obtains the first information, the source satellite device determines, based on the first information, that a part (for example, the first area) of the service area of the source satellite device is to be taken over by the target satellite device. The source satellite device may obtain the first information roughly in the following two manners.

Manner 1: The target satellite device sends the first information to the source satellite device, and correspondingly, the source satellite device receives the first information. This may be understood as that the target satellite device sends the first information to the source satellite device, and after receiving the first information, the source satellite device can learn that a part (for example, the first area) of the service area of the source satellite device is to be taken over by the target satellite device, that is, a service satellite device in the first area is to be changed from the source satellite device to the target satellite device.

Manner 2: The source satellite device determines that a part (for example, the first area) of the service area of the source satellite device is to be taken over by the target satellite device. In other words, the source satellite device determines that a service satellite device in the first area is to be changed to the target satellite device.

S520: The source satellite device sends first indication information to a first terminal device, and correspondingly, the first terminal device receives the first indication information.

Specifically, the first terminal device is located in the first area. To be specific, the service satellite device of the first terminal device is to be changed from the source satellite device to the target satellite device, and the source satellite device sends the first indication information to the first terminal device, where the first indication information indicates the first terminal device to establish a communication connection to the target satellite device.

Optionally, in a possible implementation, the first indication information includes SSB information of the target satellite device, and the SSB information is used by the first terminal device to perform downlink synchronization with the target satellite device. The SSB information includes at least one of the following: an SSB transmission periodicity, an SSB transmission time, an SSB offset, and an SSB transmission pattern. Specifically, after receiving the SSB information of the target satellite device, the first terminal device performs downlink synchronization with the target satellite device based on the SSB information, and initiates random access to the target satellite device after completing the downlink synchronization.

Optionally, in a possible implementation, the first indication information may further include at least one of the following: ephemeris information of the target satellite device, beam information of the target satellite device, and resource configuration information of the target satellite device for the first terminal device. The ephemeris information of the target satellite device is used by the first terminal device to obtain location information of the target satellite device through calculation, to perform downlink synchronization with the target satellite device.

Optionally, in a possible implementation, the first indication information may be an SSB-based measurement timing configuration SMTC. Specifically, when the SMTC is configured with the SSB information of the target satellite device, when receiving the SMTC, the terminal device considers that the terminal device needs to be handed over from the source satellite device to the target satellite device. In other words, the terminal device needs to establish the communication connection to the target satellite device.

It should be noted that, in addition to the SSB information of the target satellite device, the SMTC may further be configured with at least one of the following information: the ephemeris information of the target satellite device, the beam information of the target satellite device, and the resource configuration information of the target satellite device for the first terminal device. Specifically, the resource configuration information may be a resource used for uplink transmission after the first terminal device is handed over to the target satellite device, or the resource configuration information may be information such as a resource configuration for random access. It should be understood that this is not limited in this embodiment of this application.

Optionally, in a possible implementation, before step S520, the method may further include: S511: The source satellite device sends third indication information to the first terminal device, and correspondingly, the first terminal device receives the third indication information, where the third indication information includes first service time information.

The first service time information indicates an end time point at which the source satellite device serves the first terminal device, or the first service time information may indicate a start time point at which the target satellite device serves the first terminal device.

For example, the first service time information may indicate a period of time, for example, 1 hour. This may be understood as that the first service time information indicates that there is 1 hour before the source satellite device ends providing the service for the first terminal device, or the first service time information indicates that there is 1 hour before the target satellite device starts providing the service for the first terminal device, or the first indication information indicates that service duration in which the source satellite device provides the service for the terminal device is 1 hour.

For another example, the first service time information may indicate a time point, for example, 10 o'clock. This may be understood as that the first service time information indicates that the end time point at which the source satellite device provides the service for the first terminal device is 10 o'clock, or the first service time information indicates that the start time point at which the target satellite device provides the service for the first terminal device is 10 o'clock.

It should be noted that in this application, both step S511 and step S520 may be performed. To be specific, after the time point indicated by the first service time information reaches, the first terminal device is handed over to the target satellite device based on the received first indication information. This may be understood as that the first indication information indicates the first terminal device to be handed over to the target satellite device, and the third indication information indicates that the time point for handing over to the target satellite device is the time point indicated by the first service time information.

It should be further noted that, in this application, step S520 may alternatively be step S511. To be specific, the source satellite device sends only the third indication information to the first terminal device. In this case, the first terminal device establishes, based on the first service time information included in the third indication information, the communication connection to the target satellite device when the time point indicated by the first service time information reaches.

S530: The source satellite device sends second indication information to a second terminal device, and correspondingly, the second terminal device receives the second indication information.

Specifically, the second terminal device is located in a service area other than the first area in the service area of the source satellite device. A second satellite device determines, based on the received second indication information, that a service satellite device of the second satellite device is the source satellite device and is not changed to the target satellite device. In this case, the source satellite device sends the second indication information to the second terminal device, to indicate the second terminal device to communicate with the source satellite device.

Optionally, in a possible implementation, the second indication information includes change information of an SSB of the source satellite device, and the change information of the SSB includes at least one of the following: change information of an SSB periodicity, an SSB offset, and change information of an SSB pattern.

Optionally, in a possible implementation, the second indication information may be an SSB-based measurement timing configuration SMTC. Specifically, when the SMTC is configured with the change information of the SSB of the source satellite device, when receiving the SMTC, the terminal device considers that the terminal device does not need to be handed over from the source satellite device to the target satellite device. In other words, the terminal device continues to communicate with the source satellite device, and only original SSB information changes correspondingly. For example, the SSB periodicity is shortened.

It should be noted that either step S520 or step S530 may be performed, or both step S520 and step S530 may be performed. In addition, when both step S520 and step S530 are performed, an execution sequence is not limited in this embodiment of this application.

It should be noted that the first terminal device and the second terminal device in step S520 and step S530 may be a same terminal device, and receive different indication information when being in different service areas.

According to the technical solution of this application, in a process of handover from the source satellite to the target satellite, all user equipments in a cell can be prevented from being handed over in a same period of time, and generation of a large amount of handover signaling can be avoided, to further reduce occupation of network resources.

The foregoing describes in detail the communication methods provided in embodiments of this application with reference to FIG. 3 to FIG. 5. The foregoing communication methods are mainly described from a perspective of interaction between apparatuses. It may be understood that, to implement the foregoing functions, the apparatuses include corresponding hardware structures and/or software modules for performing the functions. A person skilled in the art may be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

It should be understood that sequence numbers of the foregoing processes do not mean execution sequences. The execution sequences of the processes should be determined based on functions and internal logic of the processes, and should not be construed as any limitation on the implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, in the foregoing embodiments of this application, a method implemented by a communication apparatus may be alternatively implemented by a component (for example, a chip or a circuit) that can be disposed inside the communication apparatus.

Communication apparatuses provided in embodiments of this application are described below in detail with reference to FIG. 6 and FIG. 7.

FIG. 6 is a diagram of a communication apparatus according to an embodiment of this application. The communication apparatus is configured to implement steps corresponding to the source satellite device, the target satellite device, or the terminal device in the foregoing embodiments. As shown in FIG. 6, the communication apparatus 600 includes a processing unit 610 and a transceiver unit 620.

In a first embodiment, the communication apparatus is configured to implement steps corresponding to the terminal device in the foregoing embodiments.

The processing unit 610 is configured to obtain first service time information, where the first service time information corresponds to a first synchronization signal block SSB index; and
the processing unit 610 is configured to establish a communication connection to a target satellite device based on the first service time information, where
the first service time information indicates an end time point at which a source satellite device serves the terminal device, or the first service time information indicates a start time point at which the target satellite device serves the terminal device.

Optionally, in some embodiments, the transceiver unit 620 is configured to receive the first SSB index sent by the source satellite device; and the processing unit 610 is specifically configured to determine the first service time information based on the first SSB index.

Optionally, in some embodiments, the transceiver unit 620 is further configured to receive a first correspondence sent by the source satellite device, where the first correspondence includes a correspondence between at least one SSB index and at least one service time; and the processing unit 610 is specifically configured to determine, as the first service time information, service time information corresponding to the first SSB index in the first correspondence.

Optionally, in some embodiments, the processing unit 610 is further configured to receive a first SSB message, where the first SSB message includes the first service time information.

Optionally, in some embodiments, the at least one SSB index corresponding to the first service time information forms a first SSB index set, and at least one terminal device corresponding to the at least one SSB index included in the first SSB index set forms a first terminal group.

Optionally, in some embodiments, a time difference between an end time point at which the source satellite device serves the first terminal group and an end time point at which the source satellite device serves the at least one terminal device is less than a first preset value; or a time difference between a start time point at which the target satellite device serves the first terminal group and a start time point at which the target satellite device serves the at least one terminal device is less than a second preset value.

Optionally, in some embodiments, the first terminal group corresponds to a first geographical location area, the at least one terminal device is located in the first geographical location area, and the first geographical location area is a service area of the target satellite device.

In a second embodiment, the communication apparatus is configured to implement steps corresponding to the source satellite device in the foregoing embodiments.

The transceiver unit 620 is configured to send a first synchronization signal block SSB index to a terminal device, where the first SSB index is used by the terminal device to determine first service time information; or
the transceiver unit 620 is configured to send a first SSB message to the terminal device, where the first SSB message includes the first service time information, where
the first service time information indicates an end time point at which the source satellite device serves the terminal device, or the first service time information indicates a start time point at which a target satellite device serves the terminal device.

Optionally, in some embodiments, the transceiver unit 620 is further configured to send a first correspondence to the terminal device, where the first correspondence includes a correspondence between at least one SSB index and at least one service time. That the first SSB index is used by the terminal device to determine the first service time information includes: The first SSB index is used by the terminal device to determine, as the first service time information, service time information corresponding to the first SSB index in the first correspondence.

Optionally, in some embodiments, the at least one first SSB index corresponding to the first service time information forms a first SSB index set, and a first terminal device corresponding to the first SSB index included in the first SSB index set forms a first terminal group.

Optionally, in some embodiments, a time difference between an end time point at which the source satellite device serves the first terminal group and an end time point at which the source satellite device serves the at least one terminal device is less than a first preset value; or a time difference between a start time point at which the target satellite device serves the first terminal group and a start time point at which the target satellite device serves the at least one terminal device is less than a second preset value.

Optionally, in some embodiments, the first terminal group corresponds to a first geographical location area, the at least one terminal device is located in the first geographical location area, and the first geographical location area is a service area of the target satellite device.

In a third embodiment, the communication apparatus is configured to implement steps corresponding to the source satellite device in the foregoing embodiments.

The processing unit 610 is configured to obtain first information, where the first information indicates that a service satellite in a first area is to be changed from the source satellite device to a target satellite device, and the first area is a part of a service area of the source satellite device; and
the transceiver unit 620 is configured to send first indication information to a first terminal device, where the first indication information indicates the first terminal device to establish a communication connection to the target satellite device, and the first terminal device is located in the first area; and/or
the transceiver unit 620 is configured to send second indication information to a second terminal device, where the second indication information indicates the second terminal device to communicate with the source satellite device, and the second terminal device is located in a service area other than the first area in the service area of the source satellite device.

Optionally, in some embodiments, the transceiver unit 620 is further configured to send third indication information to the first terminal device, where the third indication information includes first service time information, and the first service time information indicates an end time point at which the source satellite device serves the first terminal device, or the first service time information indicates a start time point at which the target satellite device serves the first terminal device.

Optionally, in some embodiments, the first indication information includes synchronization signal block SSB information of the target satellite device, and the SSB information is used by the first terminal device to perform downlink synchronization with the target satellite device.

Optionally, in some embodiments, the second indication information includes change information of a synchronization signal block SSB of the source satellite device, and the change information of the SSB includes at least one of the following: change information of an SSB periodicity, an SSB offset, and change information of an SSB pattern.

Optionally, in some embodiments, the first indication information further includes at least one of the following: ephemeris information of the target satellite device, beam information of the target satellite device, and resource configuration information of the target satellite device for the first terminal device.

Optionally, in some embodiments, the SSB information includes at least one of the following: an SSB transmission periodicity, an SSB transmission time, an SSB offset, and an SSB transmission pattern.

Optionally, in some embodiments, both the first indication information and the second indication information are SSB-based measurement timing configurations SMTCs.

Optionally, in some embodiments, the processing unit 610 is further configured to receive the first information sent by the target satellite device.

In a fourth embodiment, the communication apparatus is configured to implement steps corresponding to the target satellite device in the foregoing embodiments.

The transceiver unit 620 is configured to send first information to a source satellite device, where the first information indicates that a service satellite in a first area is to be changed from the source satellite device to the target satellite device, and the first area is a part of a service area of the source satellite device.

In a fifth embodiment, the communication apparatus is configured to implement steps corresponding to the first terminal device in the foregoing embodiments.

The transceiver unit 620 is configured to receive first indication information sent by a source satellite device, where the first indication information indicates the first terminal device to establish a communication connection to a target satellite device; and
the processing unit 610 is configured to establish the communication connection to the target satellite device based on the first indication information, where the first terminal device is located in a first area, and the first area is a part of a service area of the source satellite device.

Optionally, in some embodiments, the transceiver unit 620 is further configured to receive third indication information sent by the source satellite device, where the third indication information includes first service time information, where the first service time information indicates an end time point at which the source satellite device serves the first terminal device, or the first service time information indicates a start time point at which the target satellite device serves the first terminal device.

Optionally, in some embodiments, the first indication information includes synchronization signal block SSB information of the target satellite device, and the SSB information is used by the first terminal device to perform downlink synchronization with the target satellite device.

Optionally, in some embodiments, the first indication information further includes at least one of the following: ephemeris information of the target satellite device, beam information of the target satellite device, and resource configuration information of the target satellite device for the first terminal device.

Optionally, in some embodiments, the SSB information includes at least one of the following: an SSB transmission periodicity, an SSB transmission time, an SSB offset, and an SSB transmission pattern.

Optionally, in some embodiments, the first indication information is an SSB-based measurement timing configuration SMTC.

In a sixth embodiment, the communication apparatus is configured to implement steps corresponding to the second terminal device in the foregoing embodiments.

The transceiver unit 620 is configured to receive second indication information sent by a source satellite device, where the second indication information indicates the second terminal device to communicate with the source satellite device; and
the processing unit 610 is configured to communicate with the source satellite device based on the second indication information, where the second terminal device is located in a service area other than a first area in a service area of the source satellite device, and the first area is a part of the service area of the source satellite device.

Optionally, in some embodiments, the second indication information includes change information of a synchronization signal block SSB of the source satellite device, and the change information of the SSB includes at least one of the following: change information of an SSB periodicity, an SSB offset, and change information of an SSB pattern.

Optionally, in some embodiments, the second indication information is an SSB-based measurement timing configuration SMTC.

Optionally, the communication apparatus may further include a storage unit. The storage unit is configured to store data or instructions (which may also be referred to as code or a program). The units may interact with or be coupled to the storage unit, to implement a corresponding method or function. For example, the processing unit 610 may read the data or the instructions in the storage unit, to cause the communication apparatus to implement the methods in the foregoing embodiments.

It should be understood that division into the units in the communication apparatus is merely logical function division. In an actual implementation, all or some of the units may be integrated into one physical entity, or may be physically separated. In addition, all the units in the communication apparatus may be implemented in the form of software invoked by a processing element, or may be implemented in the form of hardware; or some units may be implemented in the form of software invoked by a processing element, and some units may be implemented in the form of hardware. For example, each unit may be a separately disposed processing element, or may be implemented by being integrated into a chip of the communication apparatus. In addition, each unit may alternatively be stored in a memory in the form of a program to be invoked by a processing element of the communication apparatus to perform a function of the unit. In addition, all or a part of the units may be integrated together, or may be implemented independently. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element.

In an example, the unit in any one of the foregoing communication apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these integrated circuit forms. For another example, when the units in the communication apparatus may be implemented in the form of scheduling a program by a processing element, the processing element may be a general-purpose processor, for example, a central processing unit (central processing unit, CPU) or another processor that may invoke a program. For another example, the units may be integrated and implemented in the form of a system-on-a-chip (system-on-a-chip, SoC).

FIG. 7 is a diagram of a communication apparatus according to an embodiment of this application. The communication apparatus is configured to implement operations of the terminal device, the source satellite device, and the target satellite device in the foregoing embodiments. As shown in FIG. 7, the communication apparatus includes a processor 710 and an interface 730. The processor 710 is coupled to the interface 730. The interface 730 is configured to implement communication with another device. The interface 730 may be a transceiver or an input/output interface. The interface 730 may be, for example, an interface circuit. Optionally, the communication apparatus further includes a memory 720, configured to store instructions executed by the processor 710, store input data required by the processor 710 to run instructions, or store data generated after the processor 710 runs instructions.

The methods performed by the terminal device, the source satellite device, and the target satellite device in the foregoing embodiments may be implemented by the processor 710 by invoking a program stored in a memory (which may be the memory 720 in the terminal device, the source satellite device, or the target satellite device, or may be an external memory). To be specific, the terminal device, the source satellite device, and the target satellite device may include the processor 710. The processor 710 invokes the program in the memory, to perform the methods performed by the terminal device, the source satellite device, and the target satellite device in the foregoing method embodiments. The processor herein may be an integrated circuit having a signal processing capability, for example, a CPU. The terminal device, the source satellite device, and the target satellite device may be implemented by one or more integrated circuits configured to implement the foregoing methods, for example, one or more ASICs, one or more microprocessors DSPs, one or more FPGAs, or a combination of at least two of these integrated circuit forms. Alternatively, the foregoing implementations may be combined.

Specifically, functions/implementation processes of the processing unit 610 and the transceiver unit 620 in FIG. 6 may be implemented by the processor 710 in the communication apparatus 700 shown in FIG. 7 by invoking computer-executable instructions stored in the memory 720. Alternatively, a function/an implementation process of the processing unit 610 in FIG. 6 may be implemented by the processor 710 in the communication apparatus 700 shown in FIG. 7 by invoking computer-executable instructions stored in the memory 720, and a function/an implementation process of the transceiver unit 620 in FIG. 6 may be implemented by the interface 730 in the communication apparatus 700 shown in FIG. 7. For example, the function/the implementation process of the transceiver unit 620 may be implemented by the processor by invoking program instructions in the memory to drive the interface 730.

When the communication apparatus is a chip used in a terminal, the chip in the terminal implements a function of the terminal in the foregoing method embodiments. The chip in the terminal receives information from another module (for example, a radio frequency module or an antenna) in the terminal device, and the information is from another terminal or a satellite device. Alternatively, the chip in the terminal sends information to another module (for example, a radio frequency module or an antenna) in the terminal, and the information is sent by the terminal to another terminal or a satellite device.

When the communication apparatus is a chip used in a satellite device, the chip in the satellite device implements a function of the satellite device in the foregoing method embodiments. The chip in the satellite device receives information from another module (for example, a radio frequency module or an antenna) in the satellite device, and the information is from another satellite device or a terminal. Alternatively, the chip in the satellite device sends information to another module (for example, a radio frequency module or an antenna) in the satellite device, and the information is sent by the satellite device to another satellite device or a terminal.

It should be understood that the processing unit in the apparatus includes a processor. The processor is coupled to a memory. The memory is configured to store a computer program or instructions and/or data. The processor is configured to execute the computer program or the instructions and/or the data stored in the memory, to perform the methods in the foregoing method embodiments.

It should be further understood that division into the units in the apparatus is merely logical function division. In an actual implementation, all or some of the units may be integrated into one physical entity, or may be physically separated. In addition, all the units in the apparatus may be implemented in the form of software invoked by a processing element, or may be implemented in the form of hardware; or some units may be implemented in the form of software invoked by a processing element, and some units may be implemented in the form of hardware. For example, each unit may be a separately disposed processing element, or may be implemented by being integrated into a chip of the apparatus. In addition, each unit may alternatively be stored in a memory in the form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element.

An embodiment of this application further provides a communication system. The communication system includes the source satellite device, the target satellite device, and the terminal device.

An embodiment of this application further provides a computer-readable medium, configured to store computer program code. A computer program includes instructions used to perform the communication methods in embodiments of this application in the foregoing methods. The readable medium may be a read-only memory (read-only memory, ROM) or a random access memory (random access memory, RAM). This is not limited in embodiments of this application.

This application further provides a computer program product. The computer program product includes instructions. When the instructions are executed, a source satellite device, a target satellite device, and a terminal device are caused to perform operations corresponding to the source satellite device, the target satellite device, and the terminal device in the foregoing methods.

An embodiment of this application further provides a system chip. The system chip includes a processing unit and a communication unit. The processing unit may be, for example, a processor, and the communication unit may be, for example, an input/output interface, a pin, or a circuit. The processing unit may execute computer instructions, to cause a chip in a communication apparatus to perform any feedback information transmission method provided in embodiments of this application.

Optionally, the computer instructions are stored in a storage unit.

Optionally, the storage unit is a storage unit in the chip, for example, a register or a cache. Alternatively, the storage unit may be a storage unit in a terminal and located outside the chip, for example, a read-only memory (read-only memory, ROM) or another type of static storage device that can store static information and instructions, or a random access memory (random access memory, RAM). Any processor mentioned above may be a CPU, a microprocessor, an ASIC, or one or more integrated circuits configured to control program execution of the feedback information transmission method. The processing unit and the storage unit may be decoupled, are disposed on different physical devices respectively, and are connected in a wired or wireless manner to implement respective functions of the processing unit and the storage unit, to support the system chip in implementing various functions in the foregoing embodiments. Alternatively, the processing unit and the memory may be coupled to a same device.

It may be understood that the memory in this embodiment of this application may be a volatile memory or a nonvolatile memory, or may include a volatile memory and a nonvolatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. There are a plurality of different types of RAMs, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in the form of a software function unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is performed by a terminal device, and the method comprises:
obtaining first service time information, wherein the first service time information corresponds to a first synchronization signal block SSB index; and
establishing a communication connection to a target satellite device based on the first service time information, wherein
the first service time information indicates an end time point at which a source satellite device serves the terminal device, or the first service time information indicates a start time point at which the target satellite device serves the terminal device.

2. The method according to claim 1, wherein the method further comprises:
receiving the first SSB index sent by the source satellite device; and
the obtaining the first service time information comprises:
determining the first service time information based on the first SSB index.

3. The method according to claim 2, wherein the method further comprises:
receiving a first correspondence sent by the source satellite device, wherein the first correspondence comprises a correspondence between at least one SSB index and at least one service time; and
the determining the first service time information based on the first SSB index comprises:
determining, as the first service time information, service time information corresponding to the first SSB index in the first correspondence.

4. The method according to claim 1, wherein the obtaining the first service time further comprises:
receiving a first SSB message, wherein the first SSB message comprises the first service time information.

5. The method according to any one of claims 1 to 4, wherein
the at least one SSB index corresponding to the first service time information forms a first SSB index set, and at least one terminal device corresponding to the at least one SSB index comprised in the first SSB index set forms a first terminal group.

6. The method according to claim 5, wherein
a time difference between an end time point at which the source satellite device serves the first terminal group and an end time point at which the source satellite device serves the at least one terminal device is less than a first preset value; or
a time difference between a start time point at which the target satellite device serves the first terminal group and a start time point at which the target satellite device serves the at least one terminal device is less than a second preset value.

7. The method according to claim 5, wherein
the first terminal group corresponds to a first geographical location area, the at least one terminal device is located in the first geographical location area, and the first geographical location area is a service area of the target satellite device.

8. A communication method, wherein the method is performed by a source satellite device, and the method comprises:
sending a first synchronization signal block SSB index to a terminal device, wherein the first SSB index is used by the terminal device to determine first service time information; or
sending a first SSB message to the terminal device, wherein the first SSB message comprises the first service time information, wherein
the first service time information indicates an end time point at which the source satellite device serves the terminal device, or the first service time information indicates a start time point at which a target satellite device serves the terminal device.

9. The method according to claim 8, wherein the method further comprises:
sending a first correspondence to the terminal device, wherein the first correspondence comprises a correspondence between at least one SSB index and at least one service time; and
that the first SSB index is used by the terminal device to determine the first service time information comprises:
the first SSB index is used by the terminal device to determine, as the first service time information, service time information corresponding to the first SSB index in the first correspondence.

10. The method according to claim 8 or 9, wherein
the at least one SSB index corresponding to the first service time information forms a first SSB index set, and at least one terminal device corresponding to the at least one SSB index comprised in the first SSB index set forms a first terminal group.

11. The method according to claim 10, wherein
a time difference between an end time point at which the source satellite device serves the first terminal group and an end time point at which the source satellite device serves the at least one terminal device is less than a first preset value; or
a time difference between a start time point at which the target satellite device serves the first terminal group and a start time point at which the target satellite device serves the at least one terminal device is less than a second preset value.

12. The method according to claim 10, wherein
the first terminal group corresponds to a first geographical location area, the at least one terminal device is located in the first geographical location area, and the first geographical location area is a service area of the target satellite device.

13. A communication method, wherein the method is performed by a source satellite device, and the method comprises:
obtaining first information, wherein the first information indicates that a service satellite in a first area is to be changed from the source satellite device to a target satellite device, and the first area is a part of a service area of the source satellite device; and
sending first indication information to a first terminal device, wherein the first indication information indicates the first terminal device to establish a communication connection to the target satellite device, and the first terminal device is located in the first area; and/or
sending second indication information to a second terminal device, wherein the second indication information indicates the second terminal device to communicate with the source satellite device, and the second terminal device is located in a service area other than the first area in the service area of the source satellite device.

14. The method according to claim 13, wherein the method further comprises:
sending third indication information to the first terminal device, wherein the third indication information comprises first service time information, wherein the first service time information indicates an end time point at which the source satellite device serves the first terminal device, or the first service time information indicates a start time point at which the target satellite device serves the first terminal device.

15. The method according to claim 13 or 14, wherein the first indication information comprises synchronization signal block SSB information of the target satellite device, and the SSB information is used by the first terminal device to perform downlink synchronization with the target satellite device.

16. The method according to any one of claims 13 to 15, wherein the second indication information comprises change information of a synchronization signal block SSB of the source satellite device, and the change information of the SSB comprises at least one of the following:
change information of an SSB periodicity, an SSB offset, and change information of an SSB pattern.

17. The method according to any one of claims 13 to 15, wherein the first indication information further comprises at least one of the following:
ephemeris information of the target satellite device, beam information of the target satellite device, and resource configuration information of the target satellite device for the first terminal device.

18. The method according to claim 15, wherein the SSB information comprises at least one of the following:
an SSB transmission periodicity, an SSB transmission time, an SSB offset, and an SSB transmission pattern pattern.

19. The method according to any one of claims 13 to 18, wherein both the first indication information and the second indication information are SSB-based measurement timing configurations SMTCs.

20. The method according to any one of claims 13 to 19, wherein the obtaining the first information further comprises:
receiving the first information sent by the target satellite device.

21. A communication method, wherein the method is performed by a target satellite device, and the method comprises:
sending first information to a source satellite device, wherein the first information indicates that a service satellite in a first area is to be changed from the source satellite device to the target satellite device, and the first area is a part of a service area of the source satellite device.

22. A communication method, wherein the method is performed by a first terminal device, and comprises:
receiving first indication information sent by a source satellite device, wherein the first indication information indicates the first terminal device to establish a communication connection to a target satellite device; and
establishing the communication connection to the target satellite device based on the first indication information, wherein
the first terminal device is located in a first area, and the first area is a part of a service area of the source satellite device.

23. The method according to claim 22, wherein the method further comprises:
receiving third indication information sent by the source satellite device, wherein the third indication information comprises first service time information, wherein the first service time information indicates an end time point at which the source satellite device serves the first terminal device, or the first service time information indicates a start time point at which the target satellite device serves the first terminal device.

24. A communication method, wherein the method is performed by a second terminal device, and comprises:
receiving second indication information sent by a source satellite device, wherein the second indication information indicates the second terminal device to communicate with the source satellite device; and
communicating with the source satellite device based on the second indication information, wherein
the second terminal device is located in a service area other than a first area in a service area of the source satellite device, and the first area is a part of the service area of the source satellite device.

25. The method according to claim 24, wherein the second indication information comprises change information of a synchronization signal block SSB of the source satellite device, and the change information of the SSB comprises at least one of the following:
change information of an SSB periodicity, an SSB offset, and change information of an SSB pattern.

26. A communication apparatus, comprising at least one processor, wherein the at least one processor is coupled to at least one memory, and the at least one processor is configured to execute a computer program or instructions stored in the at least one memory, to cause the communication apparatus to perform the method according to any one of claims 1 to 7.

27. A communication apparatus, comprising at least one processor, wherein the at least one processor is coupled to at least one memory, and the at least one processor is configured to execute a computer program or instructions stored in the at least one memory, to cause the communication apparatus to perform the method according to any one of claims 8 to 12 or claims 13 to 20.

28. A communication apparatus, comprising at least one processor, wherein the at least one processor is coupled to at least one memory, and the at least one processor is configured to execute a computer program or instructions stored in the at least one memory, to cause the communication apparatus to perform the method according to claim 21.

29. A communication apparatus, comprising at least one processor, wherein the at least one processor is coupled to at least one memory, and the at least one processor is configured to execute a computer program or instructions stored in the at least one memory, to cause the communication apparatus to perform the method according to claim 22 or 23.

30. A communication apparatus, comprising at least one processor, wherein the at least one processor is coupled to at least one memory, and the at least one processor is configured to execute a computer program or instructions stored in the at least one memory, to cause the communication apparatus to perform the method according to claim 24 or 25.

31. A computer-readable storage medium, wherein the computer-readable storage medium stores computer instructions, and when the computer instructions are run on a computer, the computer is caused to perform the communication method according to any one of claims 1 to 25.

32. A computer program product comprising instructions, wherein when the computer program product runs on a computer, the method according to any one of claims 1 to 25 is performed.

33. A chip system, comprising a processor, configured to invoke a computer program or instructions from a memory and run the computer program or the instructions, to cause a communication apparatus in which the chip system is installed to implement the method according to any one of claims 1 to 25.
